# EUROPEAN PATENT APPLICATION

(11) **EP 1 713 167 A2**
(43) Date of publication of application: **18.10.2006**
(21) Application number: 06004377.5
(22) Date of filing: 03.03.2006
(51) Int. Cl.: H02M 5/257

(54) **Electrical power supply regulator device**

(30) Priority: 14.04.2005 IT MI20050638
(71) Applicant: Vimar SpA, 36063 Marostica (VI) (IT)
(72) Inventor: Gusi, Piero Camillo, 36063 Marostica (VI) (IT)
(74) Representative: Petruzziello, Aldo

(57) **Abstract**

A regulator device (1) for regulating the electrical power supply on a load (IL1) is described.

The regulator device (1) comprises a Triac (SR1) to be connected in series to the load (IL1), all positioned between the neutral wire and the phase wire of an electrical power supply line, two Mosfets (Q1, Q2) connected in series to each other and in parallel to the Triac (SR1), a Triac command circuit (3) connected to the gate (11) of the Triac (SR1) to command its switching on/off and a Mosfet command circuit (4) connected to the gates (14, 17) of the respective Mosfets (Q1, Q2) to command their switching on/off.

## Description

The present invention refers to an electrical power supply regulator device, commonly known with the name of "dimmer". Said dimmer can be used to regulate the power supply of resistive loads such as incandescent lamps, of ferromagnetic transformers able to power resistive loads such as low voltage lamps and of dedicated electronic transformers able to power, in this case as well, low voltage lamps.

The regulator device enables to vary continuously the power supply voltage of the connected load. If the load is a lamp, the regulator device enables to vary continuously the luminosity of the lamp.

In this field of application, regulator devices using electronic components called Triac, able to be commanded at each half-wave of the electrical power supply current at a certain phase angle thereof, are very widely used.

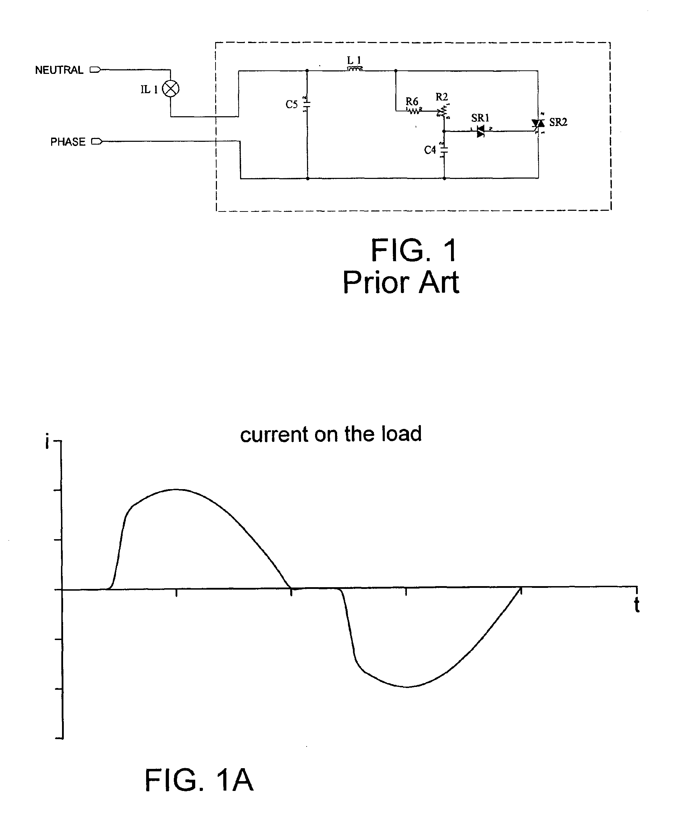

Figure 1 shows a circuit of a known regulator device, which comprises a Triac SR2 to power a resistive load IL1, such as a lamp. The Triac SR2 is commanded by a Diac SR1, which is polarised by a polarisation circuit comprising a resistor R6 connected to a resistive potentiometer R2, in turn connected to a capacitor C4.

The command pulse emitted by the Diac SR1 activates the Triac SR2, which goes from a high impedance condition to a low impedance condition, thereby powering the load IL1 connected in series. The phase angle can be varied with continuity, allowing a regulation of the effective value of the voltage on the load IL1 from 0% to nearly 100%.

As shown in Figure 1A, which illustrates the profile of the current on the load IL1, this type of regulation, allows a cut at the start phase of the voltage half-wave.

These regulators are particularly simple, have high efficiency and allow to regulate significant loads with very low losses and hence with very low dissipated power.

As a drawback, the SR2 Triac has particularly steep switching edges and this causes particularly high electromagnetic emissions conducted by the electrical line and irradiated. To be able to comply with the limits imposed by product standards, the addition of a filter becomes indispensable.

The commonly used solution is a LC filter (inductor L1 and capacitor C5).

The result is a reduction in the efficiency, with an increase in the dissipated power and the introduction of an acoustic hum that in some cases can be found annoying.

To solve the problem of the conducted emissions, the circuit shown in Figure 2 is known which consists of a four diodes bridge D1 connected in parallel to the SR1 Triac. A Mosfet or an Igbt device Q1 is connected between the positive terminal and the negative terminal of the bridge D1. The Mosfet or the Igbt Q1 is switched on slowing, through an appropriate control circuit 100, in such a way as to have sufficiently slow switching edge of the current on the load IL1 to comply with the standard.

Through the control circuit 100, once the Mosfet or the Igbt Q1 is completely switched on, the Triac SR1 is switched on and the Mosfet or the Igbt Q1 is switched off.

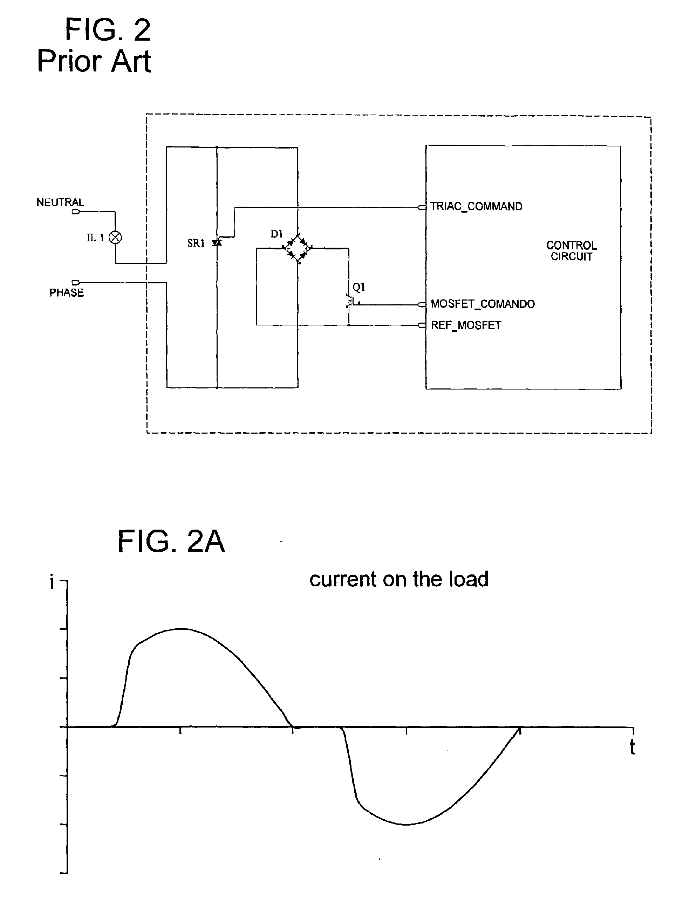

As shown in Figure 2A, in this case the profile of the current on the load IL1 is substantially equal to the one obtained with the circuit of Figure 1.

This regulator is excessively costly because of the high number of components used and it is not suitable for the regulation of electronic transformers.

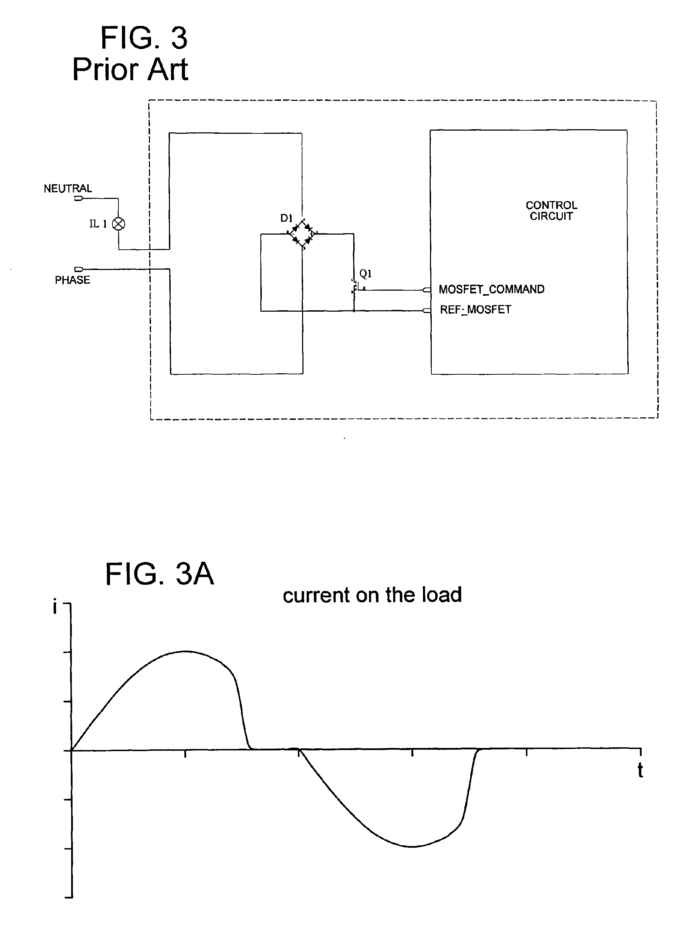

In the market there is also another type of regulator, like the one shown in Figure 3, in which the regulation of the power supply voltage takes place by a cut at the phase end of the voltage half-wave, as can be seen from the profile of the current on the load, shown in Figure 3A.

In this circuit, no Triacs are used, but only a four diodes bridge D1 and a Mosfet or an Igbt Q1 connected between the positive and negative terminals of the diode bridge D1.

The Mosfet or the Igbt Q1 is switched on by the control circuit 200 near the passage through zero of the half-wave of the electrical power supply signal and it is switched off at a certain phase angle. The switching off is slow enough to comply with the limits set in the standards with regard to the conducted and irradiated emissions.

This type of solution allows a more economical device than the previous one to be obtained, since it allows to avoid employing the Triac and it also works very well with dimmable electronic transformers because the switching on occurs near the passage through zero.

However, these regulators have the drawback of a greater dissipation than the other known regulators and therefore, for equal container and maximum temperatures reached, they can regulate loads with less power.

Moreover, the Mosfet or Igbt is switched off at current values that can be very high. Therefore, these regulators are not well suited to command inductive loads like ferromagnetic transformers.

Object of the present invention is to eliminate the drawbacks of the prior art, providing a regulating device that is versatile and able to command three different types of load:
- a resistive load, in particular incandescence or halogen lamps;
- ferromagnetic transformers able to power low voltage lamps;
- dedicated electronic transformers able to power low voltage lamps.

Another object of the present invention is to provide such a regulating device that is efficient and has low dissipative losses in order to be able to command high loads.

A further object of the present invention is to provide a regulating device that is able to be used without an inductive filter to avoid annoying hums.

Yet another object of the present invention is to provide such a regulating device that is economical and easy to manufacture.

These objects are achieved in accordance with the invention with the characteristics listed in the appended independent claim 1.

Advantageous embodiments of the invention are apparent from the dependent claims.

The regulator device according to the invention is able to regulate the electrical power supply on a load. The regulator device comprises a Triac to be connected in series to the load (IL1), all positioned between the neutral wire and the phase wire of an electrical power supply line.

The peculiar characteristic of the invention is that the regulator device comprises two transistors, connected in series to each other and in parallel to the Triac.

The regulator device further comprises a Triac command circuit connected to the gate of the Triac to command the Triac to switch on/off, and a transistor command circuit connected to the gates of the respective transistors to command the switching on/off of the two transistors.

Additional characteristics of the invention shall become more readily apparent from the detailed description that follows referred to a purely exemplifying and hence not limiting embodiment thereof, illustrated in the accompanying drawings, in which:
- Figures 1, 2 and 3 are three circuit diagrams of three power supply regulator devices according to the prior art, respectively;
- Figures 1A, 2A and 3A are three charts representing the profile of the current on the load of the three circuits of Figures 1, 2 and 3, respectively;
- Figure 4 is a block diagram showing a power supply regulator device according to the invention;
- Figures 5, 6 and 7 are three charts representing the profile of the current on the load, the profile of the current on the Mosfets and the profile of the current on the Triac of the circuit of Figure 4, respectively; and
- Figure 8 is a chart showing the superposition of the three charts of Figures 5, 6 and 7.

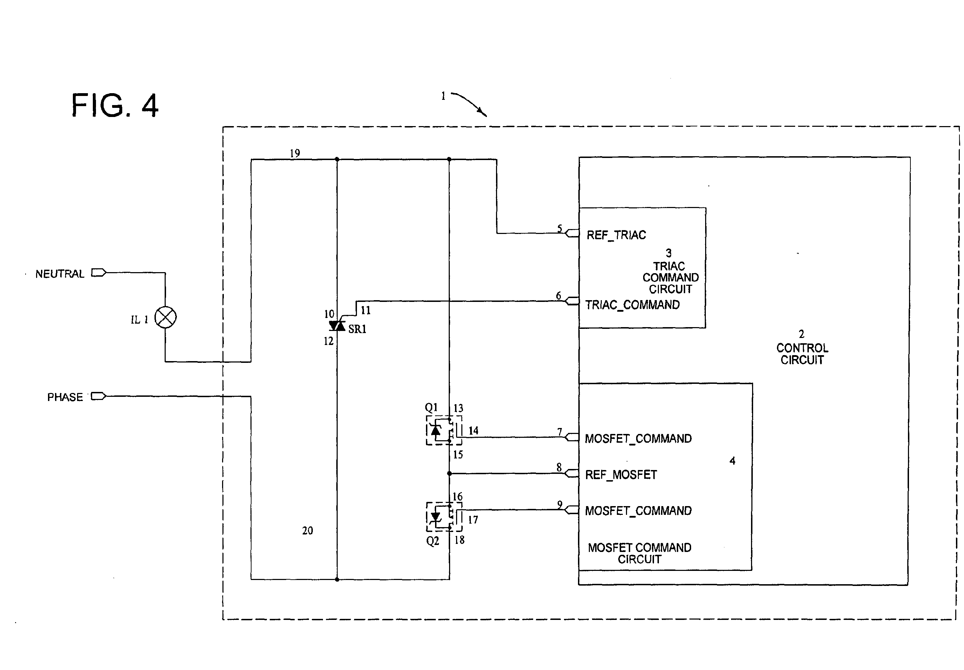

With reference to Figure 4, the power supply-regulating device according to the invention is described, globally designated by the reference number 1.

The regulator device 1 is able to regulate the power supply of a load IL1. The regulating device 1 is connected in series to the electrical load IL1 between a phase wire F and a neutral wire N of an electrical power supply line at 230Vac.

For sake of simplicity, in Figure 4 the most typical resistive load, i.e. an incandescence lamp IL1, is shown by way of example. However, the regulator device 1 can also power another type of load, such as ferromagnetic transformers able to power low voltage lamps or dedicated electronic transformers able to power low voltage lamps.

The solution idea on which the present invention is grounded is to use a Triac SR1 with in parallel two n-channel Mosfet (Q1, Q2), connected in series to each other. Each Mosfet (Q1, Q2) is provided with a diode between source and drain. The source pins 15 and 16 of the two Mosfets (Q1, Q2) are in common.

This type of circuit allows the regulation by cutting the voltage half-wave at the start of the phase. The two Mosfets (Q1, Q2) connected in series with the sources in common constitute a two-way electronic switch.

Although the description and the drawings refer specifically to n-channel Mosfets with a diode integrated between their source and drain, in an equivalent way other types of transistors can be used such as, for example, bipolar transistors (BJT) or insulated gate bipolar transistors (IGBT). In the case of the bipolar transistors, their gate, source and drain electrodes are equivalent to the gate, source and drain electrodes of the Mosfets.

Moreover, in case of the bipolar transistors the diode is not integrated, but it is inserted as a separate element between the emitter and the collector of the bipolar transistor.

The regulating device 1 comprises a control circuit 2 to control the two Mosfets (Q1, Q2) and the Triac SR1. The control circuit 2 comprises a Triac command circuit 3 and a Mosfet command circuit 4.

The Triac command circuit 3 comprises two output conductors 5 and 6. The first conductor 5 is the reference of the Triac command circuit 3 and it is connected to an anode (i.e. to the pin 10) of the Triac SR1 and to a conductor 19 that in turn is connected to the load IL1. The load IL1 is connected to the neutral pin of the power supply.

The second conductor 6 of the Triac command circuit 3 provides the command signal and is connected to the gate (i.e. to the pin 11) of the Triac SR1. The third pin 12 of the triac SR1 is connected, through a conductor 20, to the phase pin of the power supply.

The Mosfet command circuit 4 comprises three output conductors 7, 8 and 9. The conductor 8 is the reference of the Mosfet command circuit 4 and it is connected to the source of the two Mosfets (Q1, Q2), i.e. to the pin 15 of the Mosfet Q1 and to the pin 16 of the Mosfet Q2.

The conductors 7 and 9 provide the command signals to the Mosfets Q1 and Q2, respectively. Hence the conductor 7 is connected to the gate of the Mosfet Q1, i.e. to the pin 14 of the Mosfet Q1, and the conductor 9 is connected to the gate of the Mosfet Q2, i.e. to the pin 17 of the Mosfet Q2.

The control circuit 2 is connected and slaved to a control push-button whose description is not provided herein because it is conventional. This control push-button typically comprises a micro-controller that receives the command from the ON/OFF and regulation push-button of the regulating device 1. The micro-controller controls on the electrical line the passage through zero of the alternating current coming from the electrical power supply line and then calculates the instant the Mosfets (Q1. Q2) and the Triac SR1 are switched on.

At the positive half-wave of the phase wire with respect to the neutral wire, the control circuit 2 activates the Mosfet command circuit 4, which activates and controls the derivative of the current driving the gate 17 of the second Mosfet Q2. The current passes through the second Mosfet Q2 and the integrated diode in the first Mosfet Q1, since the first Mosfet Q1 is cut off. The current then reaches the load IL1 and flows through it.

Once the second Mosfet Q2 is fully switched on, the control circuit 2 activates the Triac command circuit 3 and deactivates the Mosfet command circuit 4. The second Mosfet Q2 is switched off slowly, whilst the Triac SR1 is constantly kept activated thanks to the command signal of the Triac command circuit 3 which acts on the gate 11 of the Triac SR1 until the second Mosfet Q2 is completely switched off.

In this way, the current passes from the branch of the two Mosfets (Q1, Q2) to the Triac SR1.

At the negative half-wave of the phase wire with respect to the neutral wire, the control circuit 2 activates the Mosfet command circuit 4, which activates and controls the derivative of the current driving the gate 14 of the first Mosfet Q1. The current passes through the first Mosfet Q1 and the integrated diode in the second Mosfet Q2; hence the current reaches and flows through the load IL1.

Once the first Mosfet Q1 is fully switched on, the control circuit 2 activates the Triac command circuit 3 and deactivates the Mosfet command circuit 4. The first Mosfet Q1 is switched off slowly, whilst the Triac SR1 is constantly kept activated by means of the Triac command circuit 3, which acts on the gate 11 of the Triac SR1 until the first Mosfet Q1 is completely switched off.

In this way, the current passes from the branch of the two Mosfets (Q1, Q2) to the Triac SR1.

Thus, the two Mosfets (Q1, Q2) connected in series constitute a two-way electronic switch which is switched on so that the current goes from zero to the maximum value, limiting the derivative and hence the slope. This allows to maintain the conducted and irradiated emissions of the regulator device 1 within the limits set by the standards.

Once one of the two Mosfets is fully conductive, the dissipated power is the sum of the power dissipated by the conducting Mosfet (which is equal to the conduction resistance times the current squared) and of the power dissipated by the reverse biased diode of the other Mosfet, which is equal to the diode conduction voltage times current. This sum is greater than that of a Triac in conduction due to the technological construction limits of the Mosfets and of the related integrated diodes.

It is therefore readily apparent that, to enhance the performance of the regulating device 1 and hence the efficiency, it is indispensable to have a Triac in parallel to the two Mosfets.

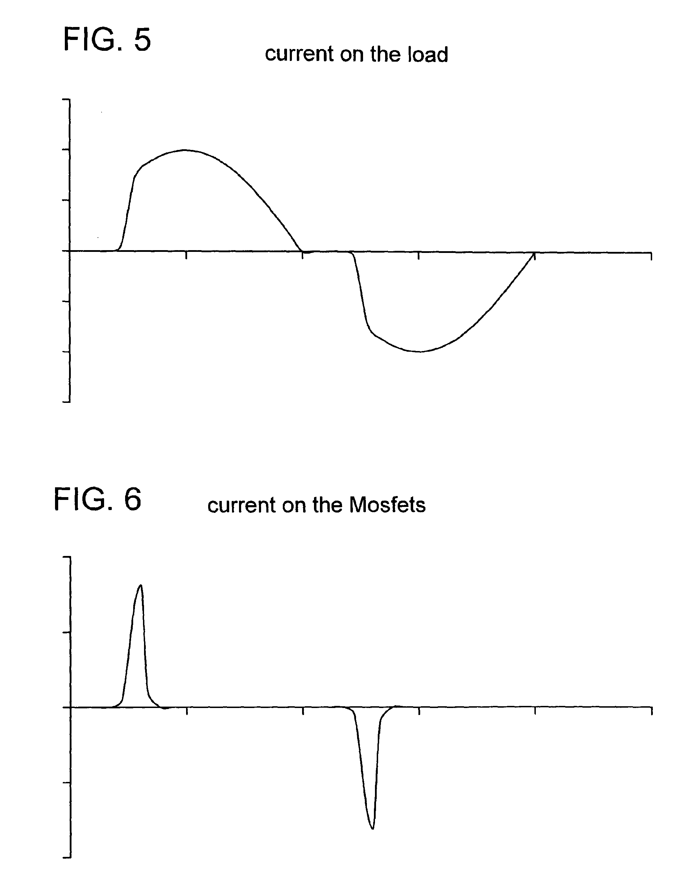

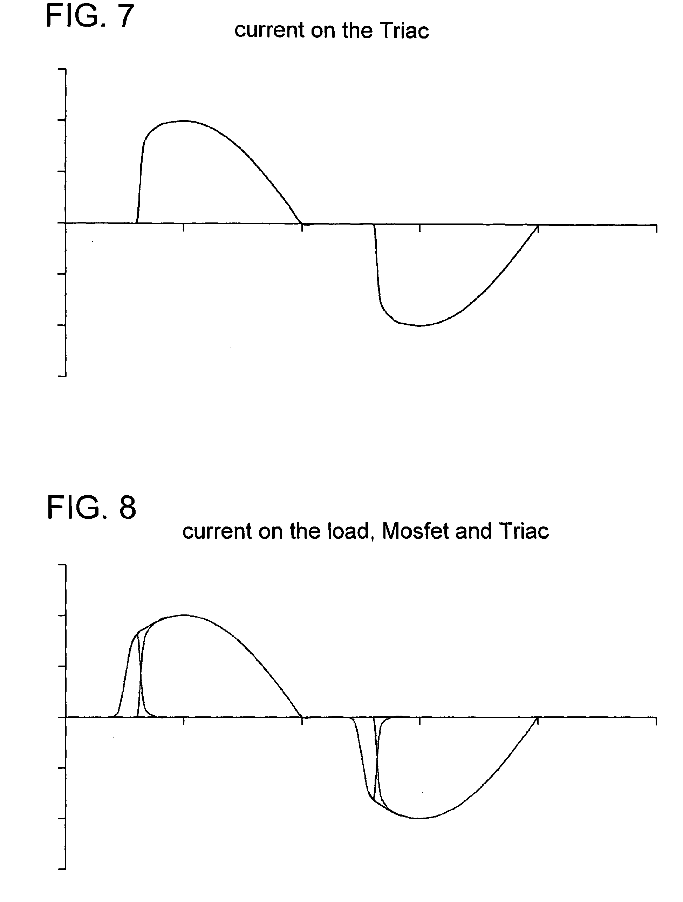

As can be clearly seen from the charts of Figures 5, 6, 7 and 8, the two Mosfets (Q1, Q2) work only for a short time interval, until the current reaches its maximum value, whilst the Triac SR1 works for all the remaining half-wave.

The type of regulation obtained is a cut at the start of the phase. This assures a good operation for incandescence and halogen lamps, since they behave as a resistive load.

Similarly, there are no particular operating problems for ferromagnetic transformers able to supply power to low voltage lamps, since the current is automatically switched off at the passage through zero. The inductive component of the transformer determines a rather small phase shift, so the voltage at the Triac pins, at the passage of the current through zero, is generally limited.

In the case of electronic transformers, instead, the regulator device 1 needs dedicated electronic transformers. This is because the electronic transformers typically have a capacitive input and hence at the time of the cut at the start of the phase, a particularly high current peak is generated. The problem is solved by limiting this peak to an acceptable value by introducing inductances of suitable value in series to the power supply.

The control circuit 2, the Triac command circuit 3 and the Mosfet command circuit 4 are shown with block diagrams and their circuit components are not described in detail. These circuits 2, 3 and 4 can be obtained with discrete or integrated components, in any way known in itself and available to those skilled in the art.

The present embodiment of the invention can be varied and modified by the skilled persons without thereby departing from the scope of the invention as expressed by the appended claim.

## Claims

1. A regulator device (1) for regulating the electrical power supply on a load (IL1), said regulator device (1) comprising a Triac (SR1) to be connected in series to the load (IL1), the Triac and the load being positioned between the neutral wire and the phase wire of an electrical power supply line,
**characterised in that** it further comprises
- two transistors (Q1, Q2) connected in series to each other and in parallel to the Triac (SR1),
- a Triac command circuit (3) connected to the gate (11) of the Triac (SR1) to command the switching on/ off of said Triac (SR1), and
- a transistor command circuit (4) connected to the gates or to the bases (14, 17) of the respective transistors (Q1, Q2) to command the switching on/off of said two transistors (Q1, Q2).

2. A regulator device (1) according to claim 1, **characterised in that** said two transistors (Q1, Q2) are two Mosfets.

3. A regulator device (1) according to claim 2, **characterised in that** said two Mosfets (Q1, Q2) are n-channel Mosfets.

4. A regulator device (1) according to claim 2 or 3, **characterised in that** to each of said two Mosfets (Q1, Q2) a diode, positioned between the drain (13, 18) and the source (15, 16) of said Mosfet (Q1, Q2), is integrated in parallel.

5. A regulator device (1) according to any of the claims 2 to 4, **characterised in that** said two Mosfets (Q1, Q2) are connected in series with their sources (15, 16) in common.

6. A regulator device (1) according to claim 5, **characterised in that** said Mosfet command circuit (4) comprises a reference conductor (8) connected to the common sources (15, 16) of the two Mosfets (Q1, Q2).

7. A regulator device (1) according to claim 1, **characterised in that** said two transistors (Q1, Q2) are two bipolar transistors (BJT).

8. A regulator device (1) according to claim 1, **characterised in that** said two transistors (Q1, Q2) are two insulated gate bipolar transistors (IGBT).

9. A regulator device (1) according to any of the previous claims, **characterised in that** said Triac command circuit (3) comprises a reference conductor (5) connected to a pin (10) of the Triac (SR1) and to the load (IL1).

10. A regulator device (1) according to any of the previous claims, **characterised in that** said load (IL1) is a resistive load, in particular an incandescence or halogen lamp.

11. A regulator device (1) according to any of the claims 1 to 9, **characterised in that** said load is a ferromagnetic transformer able to supply power to a low voltage lamp.

12. A regulator device (1) according to any of the claims 1 to 9, **characterised in that** said load is a dedicated electronic transformer able to supply power to a low voltage lamp.
